# EUROPÄISCHE PATENTSCHRIFT

(11) **EP 2 484 473 B1**
(45) Veröffentlichungstag und Bekanntmachung des Hinweises auf die Patenterteilung: **25.03.2020**
(21) Anmeldenummer: 12153404.4
(22) Anmeldetag: 01.02.2012
(51) Int. Cl.: B23D 47/02, B27B 5/16, B23Q 9/00

(54) **Stationär und mobil betreibbare Sägevorrichtung**
Stationary and mobile sawing device
Dispositif de sciage fonctionnant de manière stationnaire et mobile

(30) Priorität: 04.02.2011 DE 102011000515
(43) Veröffentlichungstag der Anmeldung: 08.08.2012
(73) Patentinhaber: wolfcraft GmbH, 56746 Kempenich (DE)
(72) Erfinder: Zimmer, Jürgen, 56077 Koblenz (DE); Grohs, Heinz-Peter, 56626 Andernach (DE)
(74) Vertreter: Grundmann, Dirk

(56) Entgegenhaltungen:
- EP-A2- 0 334 582
- WO-A1-2008/041206
- DE-A1- 3 347 662
- US-A- 4 350 193

## Beschreibung

Die Erfindung betrifft eine Vorrichtung gemäß Gattungsbegriff des Anspruches 1.

Eine derartige Vorrichtung ist aus der DE 33 47 662 bekannt.

Die EP 0 334 582 beschreibt eine an ein Werkstück anlegbare Lehre, um dort einen schrägen Schnitt zu fertigen, wobei die Lehre ein aufklappbares Element aufweist.

Sägetische sind ferner aus der DE 296 03 774 U1, DE 101 07 495 A1 oder DE 10 2007 011 784 A1 bekannt. Ein bekannter Sägetisch besitzt vier Beine und eine Arbeitsplatte. In der Arbeitsplatte befindet sich eine Öffnung, in der eine Einsatzplatte einliegt. Auf der nach unten weisenden Montageseite der Einsatzplatte ist eine Antriebsmaschine befestigt, die beispielsweise einen Fräser oder ein Kreissägeblatt oder eine Stichsäge antreibt. Das von der Antriebsmaschine angetriebene Werkzeug ragt durch eine Werkzeugdurchgriffsöffnung nach oben über die Arbeitsseite der Einsatzplatte, die mit der Oberfläche der Arbeitsplatte fluchtend in der Aufnahmeöffnung liegt.

Der Erfindung liegt die Aufgabe zu Grunde, die gattungsgemäße Vorrichtung gebrauchsvorteilhaft weiterzubilden.

Gelöst wird die Aufgabe durch die in dem Anspruch 1 angegebene Erfindung.

Die Arbeitsseite der Einsatzplatte weist ein Oberflächenprofil auf, das zu einem Führungsprofil einer Führungsschiene korrespondiert. Zufolge dieser Ausgestaltung ist mit dem an der Einsatzplatte montiertem Werkzeug, beispielsweise einer elektrisch angetriebenen Kreissäge, Stichsäge oder Oberfräse neben dem stationären Betrieb auch der mobile Betrieb entlang einer Führungsschiene möglich. Die Einsatzplatte bildet eine Maschinenbefestigungsplatte und liegt im stationären Betrieb mit ihrer Arbeitsseite nach oben in der Aufnahmeöffnung ein. Sie liegt derart in der Aufnahmeöffnung ein, dass sie entnehmbar ist. Sie kann durch eine Schwenkbewegung in eine Entnahmestellung gebracht werden, in der sie aus der Aufnahmeöffnung herausgehoben werden kann. Die Einsatzplatte kann dann im mobilen Betrieb als Führungsplatte verwendet werden. Sie wird mit ihrer Arbeitsseite nach unten auf die Führungsschiene aufgesetzt und kann entlang der Führungsschiene verschoben werden. Liegt die Führungsschiene auf einem Werkstück, so greift das Werkzeug in das Werkstück, um es zerspanend zu bearbeiten. Erfindungsgemäß ist vorgesehen, dass in einer der Arbeitsseite zugeordneten Aussparung, die sich über die gesamte Längserstreckung der Arbeitsseite erstrecken kann, eine Sicherheitsplatte einliegt. Diese Sicherheitsplatte dient zur Verminderung der Öffnungsweite der Werkzeugdurchtrittsöffnung. Es sind verschieden ausgestaltete Sicherheitsplatten vorgesehen, die jeweils verschieden ausgebildete Werkzeugdurchtrittsöffnungen aufweisen. Eine Sicherheitsplatte zur Verwendung mit einer Kreissäge hat beispielsweise eine Werkzeugdurchtrittsöffnung in Form eines Längsschlitzes. Die mit einer Stichsäge oder einer Oberfräse zu verwendenden Sicherheitsplatten haben anders gestaltete Werkzeugdurchtrittsöffnungen, beispielsweise in Form einer runden Bohrung. Die Zuordnung der Einsteckplatte in die Aufnahmeöffnung erfolgt im Wege einer Steck-Schwenkbewegung. Am Rand der Einsatzplatte befinden sich Hakenelemente, die eine Hakenaufnahmeöffnung aufweisen, in die ein Gelenk-Haltezapfen eintreten kann, der am Rand der Aufnahmeöffnung befestigt ist. An den beiden sich gegenüberliegenden Längsrändern der Aufnahmeöffnung befindet sich jeweils ein derartiger Gelenk-Haltezapfen, der mit einem entsprechenden Hakenelement auf der Montageseite der Einsatzplatte zusammenwirkt. Die beiden Gelenk-Haltezapfen fluchten zueinander und können jeweils in die U-förmige Halteöffnung des ihnen zugeordneten Halteelementes eintreten, wenn die Einsatzplatte mit der auf der Montageplatte fest montierten Antriebsmaschine in einer Schrägstellung oder einer Querstellung zur Erstreckungsebene der Arbeitsplatte in die Aufnahmeöffnung hingesetzt wird. Beim Eintritt der Gelenk-Haltezapfen in die einseitig offene Halteöffnung des Halteelementes bildet sich eine Schwenkachse aus, wenn die Gelenk-Haltezapfen gegen das rückwärtige Ende der Halteöffnung anstoßen. Um diese Schwenkachse kann die mit der Antriebsmaschine bestückte Einsatzplatte in die Aufnahmeöffnung geschwenkt werden. Im vollständig eingeschwenkten Zustand stützt sich die andere Seite der Einsatzplatte auf Rastzapfen ab, die ebenfalls von den beiden Längsseitenrändern der Aufnahmeöffnung abragen und die mit Rastelementen am unteren Rand der Einsatzplatte verrasten. In dieser Position fluchtet die Arbeitsseite der Einsatzplatte mit der Oberfläche der Arbeitsplatte. In einer Weiterbildung der Erfindung ist vorgesehen, dass die Einsatzplatte in der vollständig eingeschwenkten Stellung schwenkblockiert ist. Dies kann mit Hilfe der Sicherheitsplatte erfolgen, die zu diesem Zwecke längsverschieblich in der ihr zugeordneten Aussparung der Arbeitsseite einliegt. Ein Ende der Sicherheitsplatte kann über den schwenkachsenseitigen Rand der Einsatzplatte hinausgeschoben werden und gelangt dort in eine sich an die Aufnahmeöffnung anschließende Nische. Um zu vermeiden, dass die Sicherheitsplatte in dieser Position aus der Aussparung herausgenommen werden kann, tritt ein Randabschnitt der Sicherheitsplatte in einen Untergriff unter einen Randabschnitt der Aussparung. Dies kann mit Hilfe mehrerer vom Rand der Sicherheitsplatte abragenden Vorsprünge erfolgen, die in entsprechende Untergriffsschlitze des Randes des Aussparung eingeschoben werden können. Eine Weiterbildung der Erfindung betrifft ein Ausrichtmittel. Es sind bevorzugt zwei Ausrichtvorrichtungen vorgesehen, die am Rand der Arbeitsplatte am Arbeitstisch befestigbar sind. Diese Ausrichtvorrichtungen dienen der Fixierung der Führungsschiene auf der Arbeitsplatte. Die Ausrichtvorrichtungen greifen hierzu in eine sich längs der Unterseite der Führungsschiene erstreckende Profilnut und bewirken somit eine Fixierung der Führungsschiene gegen eine Querverlagerung. Die Ausrichtvorrichtung kann ein in einem Führungsschacht steckendes vertikal bewegliches Element, beispielsweise einen Stab aufweisen, der einen Kopf aufweist, der in die Profilnut der Führungsschiene eingreift. Hierdurch lässt sich der durch die Materialstärke eines zu bearbeitenden Werkstücks bedingte Abstand zwischen der Unterseite der Führungsschiene und der Arbeitsplatte ausgleichen. Das vertikal bewegliche Element kann mit Rastmitteln versehen sein, die mit Gegenrastmitteln zusammenarbeiten, sodass sich das bewegliche Element nur nach Betätigen eines Rasthebels und Auflösen der Verrastung nach oben verlagern kann. Dies erfolgt bevorzugt mit Hilfe der Kraft einer Feder. Diese Verrastung ist ein optionales Element und wirkt bevorzugt lediglich einseitig, sodass mit einem vertikalen Druck nach unten das bewegliche Element in den Führungsschaft hineingeschoben werden kann, wobei die Feder gespannt wird. Hierzu wird die Verrastung von sägezahnähnlichen, ineinandergreifenden Rastzähnen ausgebildet. Bei einer entsprechend geringen Federkraft ist es auch möglich, dass das vertikal bewegliche Element permanent nach oben beaufschlagt wird und lediglich vom Gewicht der Führungsschiene niedergehalten wird. Es ist auch denkbar, die Rastmittel an- und abschaltbar zu gestalten. Das Ausrichtmittel kann ein Gehäuse insbesondere aus zwei Gehäuseschalen aufweisen, wobei eine Gehäuseschale über Befestigungsarme mit einem insbesondere von einem Hohlprofil ausgebildeten Rand der Arbeitsplatte befestigt ist. Der Kopf dieser vom Ausrichtmittel gebildeten Ausrichtvorrichtung greift bevorzugt formschlüssig in die Profilnut der Führungsschiene ein. Der Eingriff erfolgt somit mit minimalem seitlichen Spiel. Ist die Führungsnut schwalbenschwanzförmig oder C-förmig ausgebildet, besitzt also eine Hinterschneidung, so kann der Kopf eine diesem Querschnittsprofil der Profilnut entsprechende Negativform besitzen. Das bewegliche Element kann bei einer derartigen Form des Kopfes sogar beim Anheben der Profilschiene aus seinem Führungsschaft herausgezogen werden, sodass grundsätzlich sogar auf die Feder verzichtet werden kann. Die Schiene muss dann allerdings über den Kopf geschoben werden, sodass der Kopf vom Stirnrand der Schiene in die Profilnut eingleiten kann. Bevorzugt steht der Kopf aber derart in der Profilnut, dass die Führungsschiene nach oben von der Arbeitsplatte abhebbar ist.

Eine Weiterbildung der Erfindung betrifft darüber hinaus auch einen Längsanschlag, der auf den beiden, voneinander weg weisenden Seiten eine Arbeitsplatte eines Arbeitstisches befestigbar ist. Die Befestigung erfolgt bevorzugt auf jeder Seite mittels einer Klemmvorrichtung, die einen Exzenternocken aufweist, der gegen einen Rahmen, insbesondere einen Profilrand des Arbeitstisches geklemmt werden kann. Zur Folge dieser Ausgestaltung ist der Längsanschlag in verschiedenen Abständen zum Werkzeug parallel zur Schnittrichtung fixierbar und kann bei der Bearbeitung eines Werkstücks nicht seitlich ausweichen. In einer besonders bevorzugten Weiterbildung ist an dem Längsanschlag eine Führungsleiste befestigt. Diese Führungsleiste erstreckt sich nur über eine Teillänge des Längsanschlages und ist in Längsrichtung zum Längsanschlag verschieblich und mittels einer Feststelleinrichtung dort feststellbar. Die Führungsleiste kann derart angeordnet werden, dass ihr in Schnittrichtung weisendes Ende etwa auf Höhe des Bearbeitungswerkzeuges, beispielsweise auf Höhe der Austauchseite des Kreissägeblattes oder der Eintauchseite des Kreissägeblattes festlegbar ist. Hierdurch bildet sich in Schnittrichtung abwärts der Führungsleiste ein Freiraum zum Längsanschlag aus, in den ein Werkstück ausweichen kann, um ein Verklemmen mit dem Sägeblatt oder einem anderweitigen Werkzeug zu verhindern.

Ausführungsbeispiele der Erfindung werden nachfolgend anhand beigefügter Zeichnungen erläutert. Es zeigen:
- Fig. 1:: eine perspektivische Darstellung eines Arbeitstisches 1 im Bereich seiner Arbeitsplatt 2 mit einer Einsatzplatte 4 in Einsetzbereitschaftsstellung und mit an der Montageseite 5 angebrachten Arbeitsmaschine 11 in Form einer Handkreissäge und abgenommener Sicherheitsplatte 14,
- Fig. 2:: den Arbeitstisch 1 in einer perspektivischen Totalen mit in die Aufnahmeöffnung 3 eingesetzter Einsatzplatte 4 jedoch im verschwenkten Zustand,
- Fig. 3:: eine Draufsicht auf die Arbeitsplatte 2 mit vollständig eingesetzter, bündig in der Arbeitsplatte 2 einliegender Einsatzplatte 4,
- Fig. 4:: eine Darstellung gemäß Figur 3, wobei jedoch die in der Aussparung 15 einliegende Sicherheitsplatte 14 zum schwenkachsenseitigen Ende der Einsatzplatte 14 verschoben ist, sodass ein Randabschnitt 14' der Sicherheitsplatte 14 in eine Nische 22 eingreifend die Schwenkbarkeit der Sicherheitsplatte 14 blockiert,

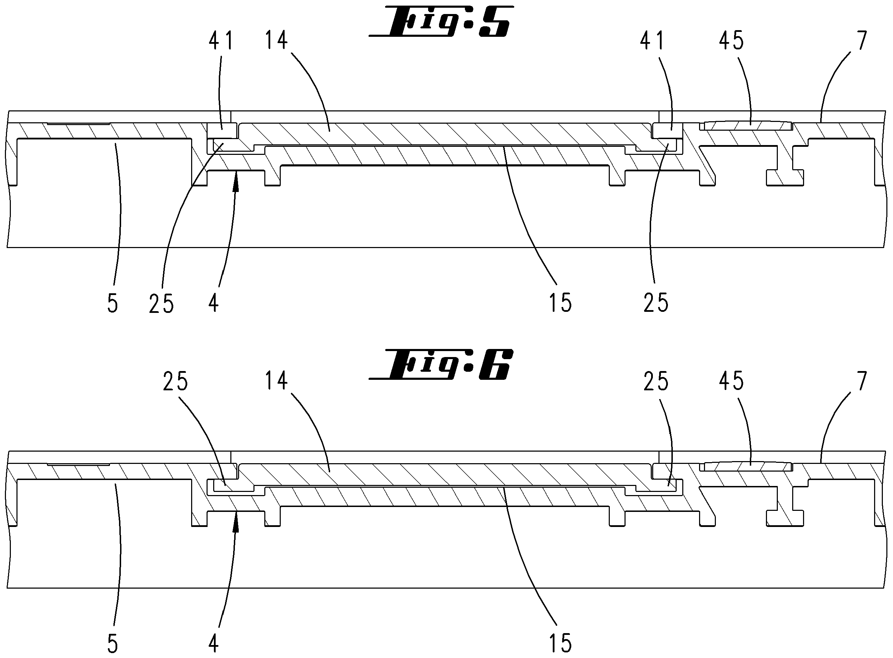

- Fig. 5:: einen Schnitt gemäß der Linie V-V in Figur 3,
- Fig. 6:: einen Schnitt gemäß der Linie VI-VI in Figur 4,

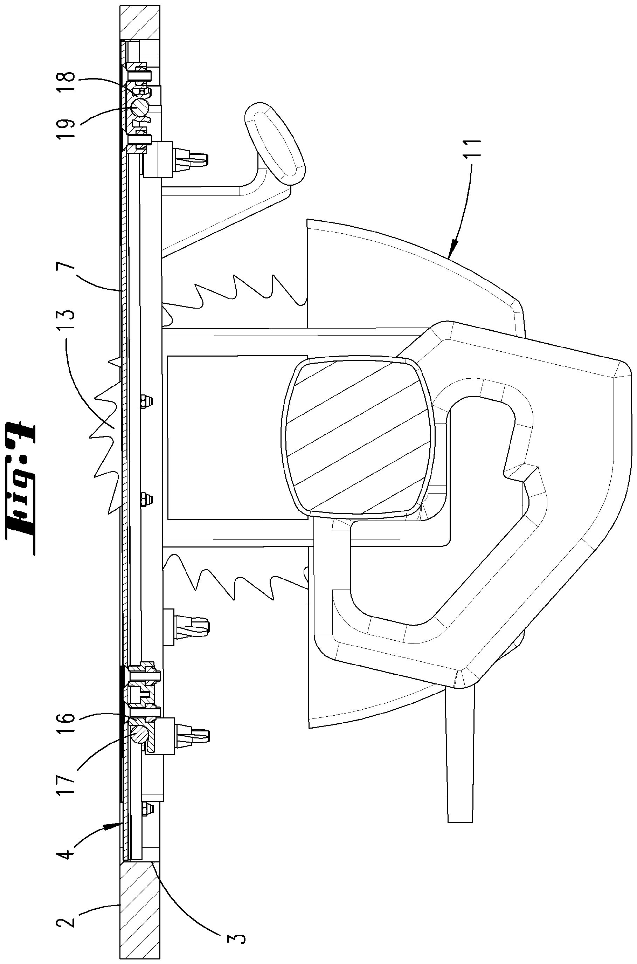

- Fig. 7:: einen Schnitt gemäß der Linie VII-VII in Figur 4,

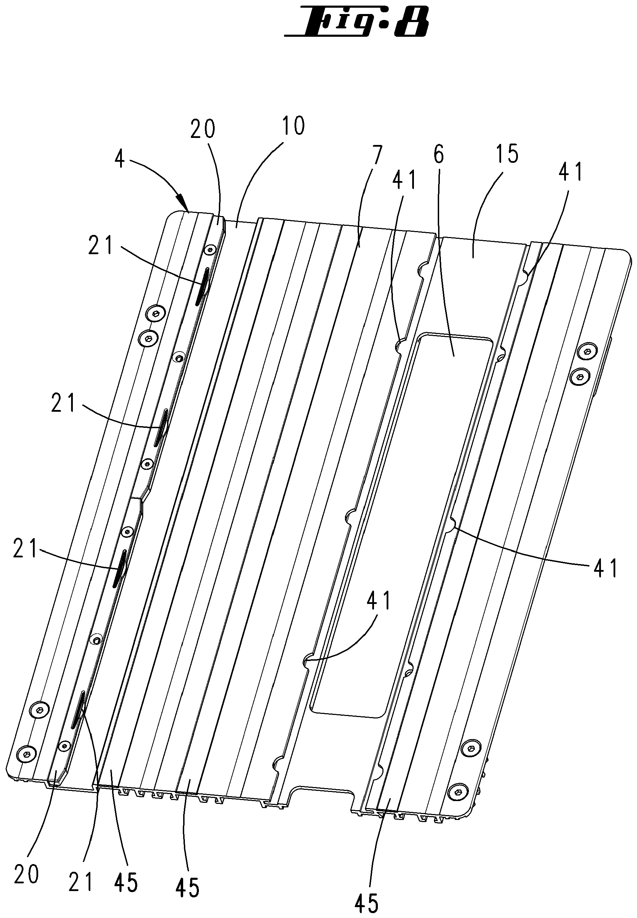

- Fig. 8:: die Einsatzplatte 4 perspektivisch mit Blick auf die Arbeitsseite 7,

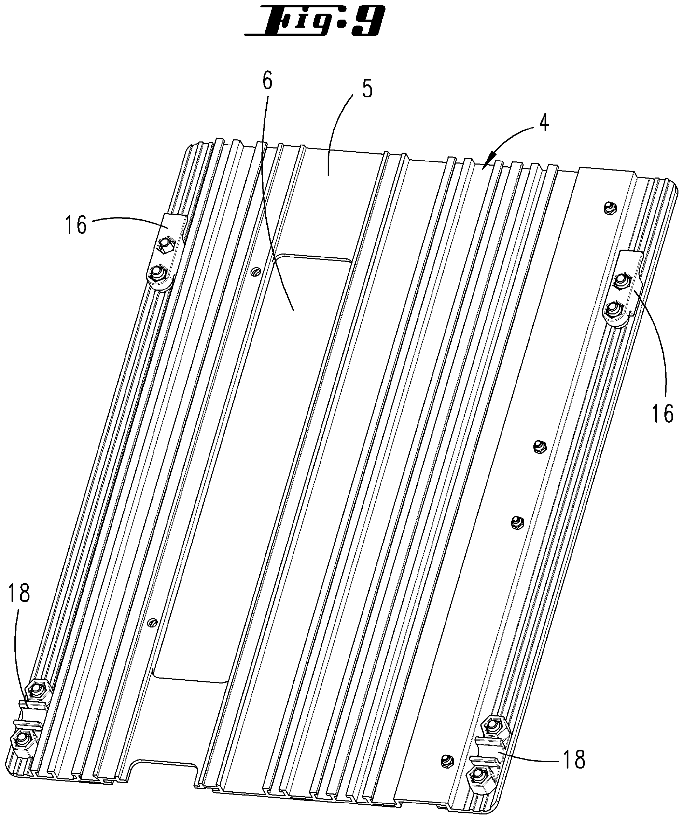

- Fig. 9:: die Einsatzplatte 4 mit Blick auf die Montageseite 5,
- Fig. 10:: die mit einer Antriebsmaschine in Form einer Handkreissäge bestückte Einsatzplatte 4 als Führungsplatte auf einer Führungsschiene 8,
- Fig. 11:: einen Schnitt gemäß der Linie XI-XI in Figur 10,
- Fig. 12:: eine Explosionsdarstellung einer Verwendung einer Führungsschiene 8 auf einer Arbeitsplatte 2 eines Arbeitstisches 1, bei dem am Rande 2 Arretiervorrichtungen 26 angeordnet sind, um die auf einem Werkstück aufliegende Führungsschiene 8 gegen seitliches Verlagern zu fixieren,
- Fig. 13:: eine Seitenansicht auf die Ausrichtvorrichtung 26, wobei deren Kopf 34 in eine Profilnut 40 der Führungsschiene formschlüssig eingreift,
- Fig. 14:: eine Schnitt gemäß der Linie XIV-XIV in Figur 13,
- Fig. 15:: einen Schnitt gemäß der Linie XV-XV in Figur 13,
- Fig. 16:: einen Schnitt gemäß der Linie XVI-XVI in Figur 15,
- Fig. 17:: eine erste Explosionsdarstellung der Elemente der Ausrichtvorrichtung 26,

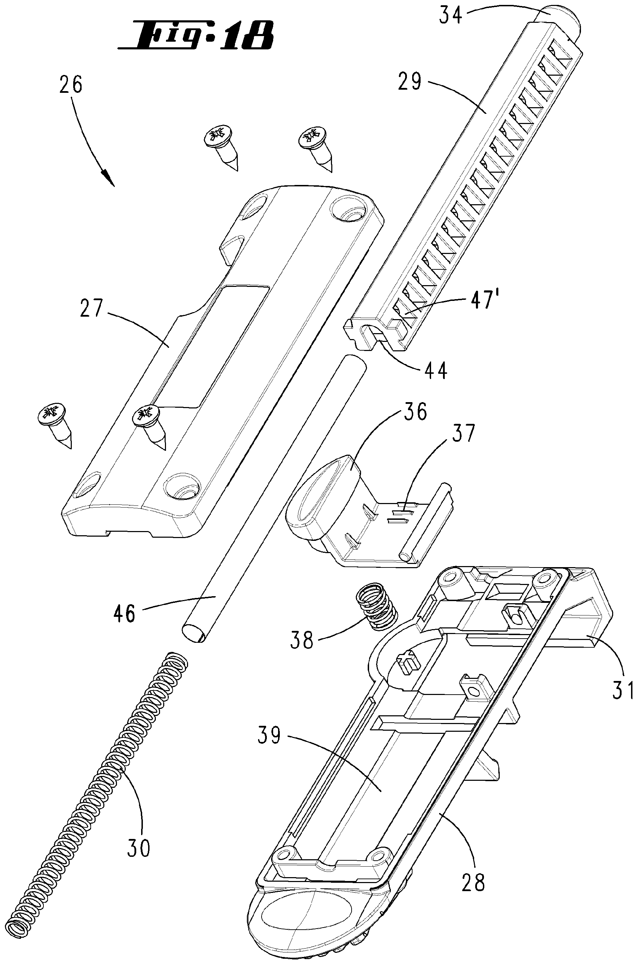

- Fig. 18:: eine zweite Explosionsdarstellung der Elemente der Ausrichtvorrichtung 26,
- Fig. 19:: eine erste Darstellung einer Sicherheitsplatte eines zweiten Ausführungsbeispiels zur Verwendung mit einer Oberfräse,
- Fig. 20:: eine zweite Darstellung der Sicherheitsplatte,
- Fig. 21:: einen Längsanschlag, der parallel zur Schnittrichtung an der Werkplatte montiert ist,
- Fig. 22:: einen Schnitt gemäß der Linie XXII-XXII in Figur 21,
- Fig. 23:: eine Darstellung gemäß Figur 22 jedoch mit in Erstreckungsrichtung des Längsanschlages verschobener Führungsleiste,
- Fig. 24:: den vergrößerten Ausschnitt XXIV in Figur 23,
- Fig. 25:: eine Darstellung gemäß Figur 23 jedoch mit gelöster Klemmvorrichtung,
- Fig. 26:: einen Schnitt gemäß der Linie XXVI-XXVI in Figur 22

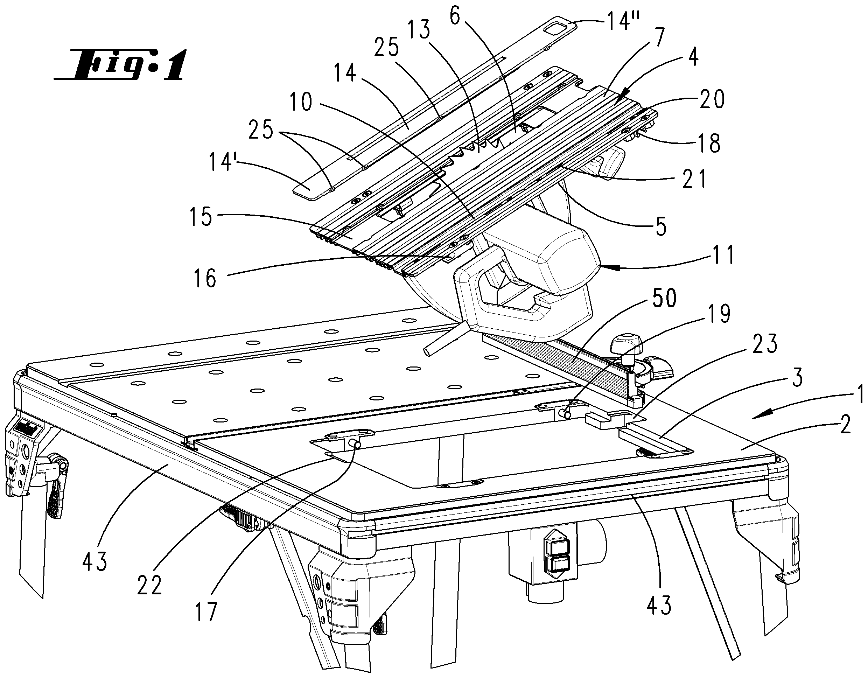

Der in den Figuren 1, 2 und 12 perspektivisch dargestellte Arbeitstisch 1 besitzt eine rechteckige, insbesondere aus Holz gefertigte Arbeitsplatte 2, die in einem von einem Hohlprofil ausgebildeten Rahmen 43 einliegt. Der Rahmen 43 wird von vier Füßen getragen, die jeweils an einer Ecke des Rahmens 43 befestigt sind und die entfernbar bzw. klappbar sind. Die Oberfläche der Arbeitsplatte 2 besitzt eine Vielzahl von gitterartig angeordneten Öffnungen zur Befestigung von Werkstück Haltepratzen. Parallel zu einer Randkante der Arbeitsplatte 2 verlaufen darüber hinaus Nuten, in denen Längs- oder Queranschläge für Werkstücke einsetzbar sind, die auch winkelverstellbar sind.

In der Arbeitsplatte 2 befindet sich eine im Wesentlichen rechteckige Öffnung 3. Vom Rand der Öffnung 3 ragen zueinander fluchtende Gelenk-Haltezapfen 17 in den Freiraum der Aufnahmeöffnung 3. Es sind insgesamt zwei derartige Gelenk-Haltezapfen vorgesehen, die jeweils an sich gegenüberliegenden Längsrändern angeordnet sind und miteinander fluchten. Ferner ragen in ähnlicher Anordnung fluchtend zueinander Rastzapfen 19 von sich gegenüberliegenden Längsrändern der Aufnahmeöffnung 3 in deren Freiraum.

Von den sich gegenüberliegenden beiden Schmalseitenrändern erstrecken sich Nischen 22, 23 in die Arbeitsplatte 2. Die Nische 22 bildet eine vertiefte Stufe aus, auf der sich ein Endabschnitt 14' einer Sicherheitsplatte 14 abstützen kann. Die Nische 23 bildet ebenfalls eine Stufe aus, jedoch auch eine Eingriffsöffnung, die mit einem Auge eines anderseitigen Endes 14" der Sicherheitsplatte 14 korrespondiert.

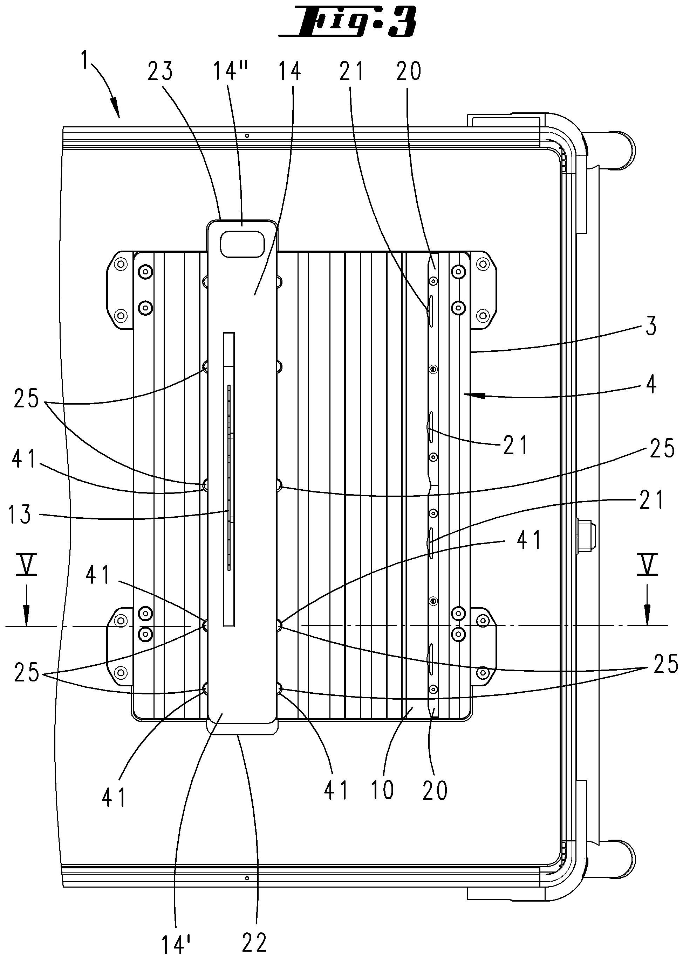

Die Figur 1 zeigt in einer Einsetzbereitschaftsstellung eine Einsatzplatte 4, die aus einem Stranggussprofilteil gefertigt sein kann. Sie besitzt parallel zu ihren beiden Längsseiten verlaufende Nuten, Rippen. Auf einer Arbeitsseite 7 befindet sich eine sich über die gesamte Längsseite erstreckende Aussparung 15 in Form einer flachen Vertiefung zur Aufnahme der Sicherheitsplatte 14. Der Rand der Aussparung 15 besitzt mehrere Aussparungen 41, in die Fortsätze 25 der Sicherheitsplatte 14 eintreten können. Wird die Sicherheitsplatte 14 von der in der Figur 3 dargestellten Einsetz-/Entnahmestellung in Erstreckungsrichtung der Aussparung 15 verschoben tritt ein Randabschnitt 14' über den Rand der Einsatzplatte 4. Einhergehend damit treten die Fortsätze 25, die beim Einsetzen der Sicherheitsplatte 14 in die Aussparung 15, in die Aussparung 41 eintauchend in eine Hintergriffsstellung, sodass die Sicherheitsplatte 14 nicht nach oben aus der Aussparung 15 entnommen werden kann.

Die Arbeitsseite 7 der Einsatzplatte 4 weist darüber hinaus eine sich über ihre gesamte Länge erstreckbare Führungsnut 10 auf, in der eine, bspw. aus Kunststoff gefertigte Führungsleiste 20 einliegt. Mit der Führungsleiste 20 wird die lichte Weite der Führungsnut 10 vermindert. Die Führungsleiste 20 ist im Ausführungsbeispiel zweiteilig ausgebildet. Jeder der beiden Teile der Führungsleiste 20 bilden zwei Federelemente 21 aus, die in dem verbliebenen Freiraum der Führungsnut 10 ragende Vorsprünge ausbilden. Rückwärtig dieser Vorsprünge befindet sich ein Längsschlitz, sodass die Vorsprünge seitlich ausweichen können.

Die Führungsnut 10 korrespondiert hinsichtlich ihrer Weite zu einer Führungsrippe 9 einer Führungsschiene 8, sodass die Führungsrippe 9 im Wesentlichen spielfrei in die Führungsnut 10 eingreifen kann, wobei die Federelemente 21 gespannt werden und sich mit Federkraft an die Seitenwandung der Führungsrippe 9 anlegen. In Aussparungen der Arbeitsseite 7 liegen zudem Gleitelemente 45 in Form von Leisten ein. Die Gleitelemente 45 besitzen eine gewölbte oder ebene, erhabene Oberfläche und bestehen aus einem auf Metall gut gleitenden Werkstoff. Die Wölbung oder die Ebene ragt über die Breitseitenebene der Arbeitsseite 7.

Die der Arbeitsseite 7 gegenüberliegende Seite bildet eine Montageseite 5 aus, an der die Arbeitsmaschine 11, die im Ausführungsbeispiel eine Kreissäge ist, befestigt werden kann. Dies erfolgt mittels Spannpratzen 24 und weiterer winkelförmiger Ausrichtmittel, die als solche bekannt sind.

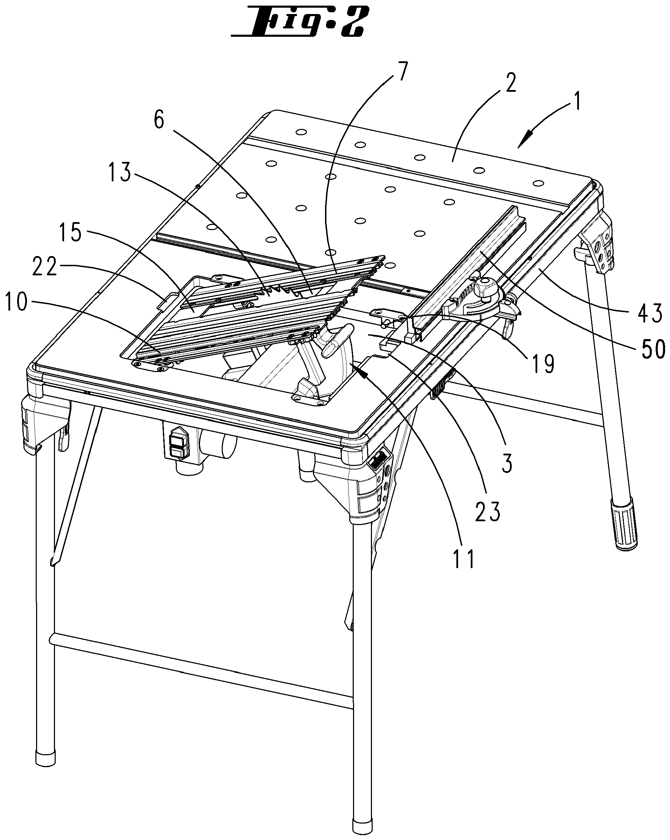

An den beiden Längsrändern der Montageseite 5 befinden sich Befestigungsmittel 16,18, mit denen die Einsatzplatte 4 in der Aufnahmeöffnung 3 befestigt werden kann. Es handelt sich dabei zunächst um Hakenelemente 16, die eine U-förmige Öffnung ausbilden, in die der Gelenk-Haltezapfen 17 eintreten kann. Hierzu wird die Einsatzplatte aus der in der Figur 1 dargestellten Abstandsstellung mit auf der Montageseite 5 montierter Antriebsmaschine 11 in die in Figur 2 dargestellte Stellung gebracht, in der die Einsatzplatte 4 schräg zur Arbeitsplatte 2 aus der Aufnahmeöffnung 3 ragt und im Wege einer Steckmontage die Gelenk-Haltezapfen 17 in die U-Ausnehmungen der Hakenelemente 16 eintreten, sodass sich eine Schwenkachse ausbildet, um die die Einsatzplatte 4 in eine Arbeitsstellung verschwenkt werden kann, in der die Arbeitsseite 7 bündig in der Oberfläche der Arbeitsplatte 2 liegt. Diese Stellung ist in der Figur 3 dargestellt.

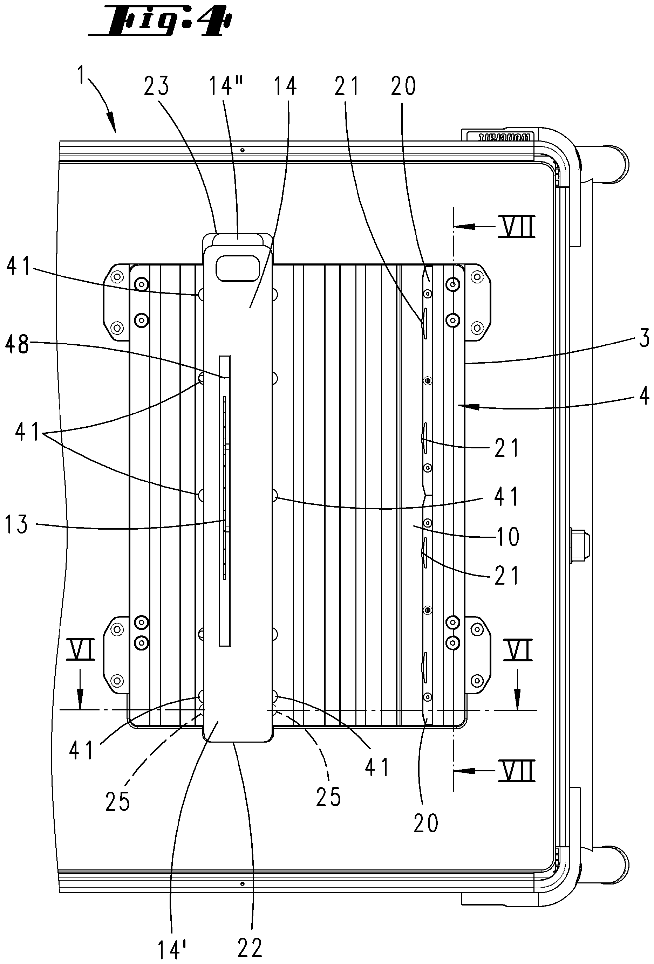

Um das Anwendungsspektrum der Vorrichtung groß zu halten, ist eine relativ weite Werkzeugdurchtrittsöffnung 6 in der Einsatzplatte 4 vorgesehen. Aus Sicherheitsgründen wird die Werkzeugdurchtrittsöffnung 6 für den stationären Betrieb mittels der in die Aussparung 15 einsetzbaren Sicherheitsplatte 14 vermindert. Beim Einsetzen der Sicherheitsplatte 14 von oben in die Aussparung 15 treten die vom Rand der Sicherheitsplatte 14 abragenden Fortsätze 25 zunächst in die Aussparungen 41 ein. Dies ist in Figur 3 dargestellt. Aus dieser Position kann die Sicherheitsplatte 14 geringfügig innerhalb der Aussparung 15 bis in die in Figur 4 dargestellte Stellung horizontal verschoben werden. Dabei greift der Endabschnitt 14' der Sicherheitsplatte 14 in die Nische 22 ein und bewirkt dabei eine Schwenkblockierung der Einsatzplatte 5. Einhergehend mit dieser Verlagerung, die durch Eingriff in das am anderen Ende 14' angeordnete Auge erfolgen kann, treten die Fortsätze 25 in eine Hintergriffsstellung in den Zeichnungen nur angedeutete Schlitzöffnungen der Wandung der Aussparung 15, sodass eine Entnahme der Sicherheitsplatte 14 aus der Aussparung 15 nur nach vorherigem Zurückschieben der Sicherheitsplatte 14 in die in Figur 3 dargestellte Betriebsstellung möglich ist.

In der in Figur 4 dargestellten Betriebsstellung wird das elektrisch betriebene Werkzeug, bei dem es sich hier um eine Kreissäge handelt, sich aber auch um eine Stichsäge oder um eine Oberfräse handeln kann, die an der Montageseite 5 der Einsatzplatte 4 montiert ist, in einer stationären Betriebsstellung betrieben. Über die Arbeitsplatte 2 kann ein Werkstück verschoben werden, bei dem das Werkzeug 13, beispielsweise das Kreissägeblatt in das Werkstück spanabhebend eintaucht. Zur Führung des Werkstücks dient der bereits oben erwähnte, winkelverstellbare, in einer Nut der Arbeitsplatte 2 verschiebliche Queranschlag 50.

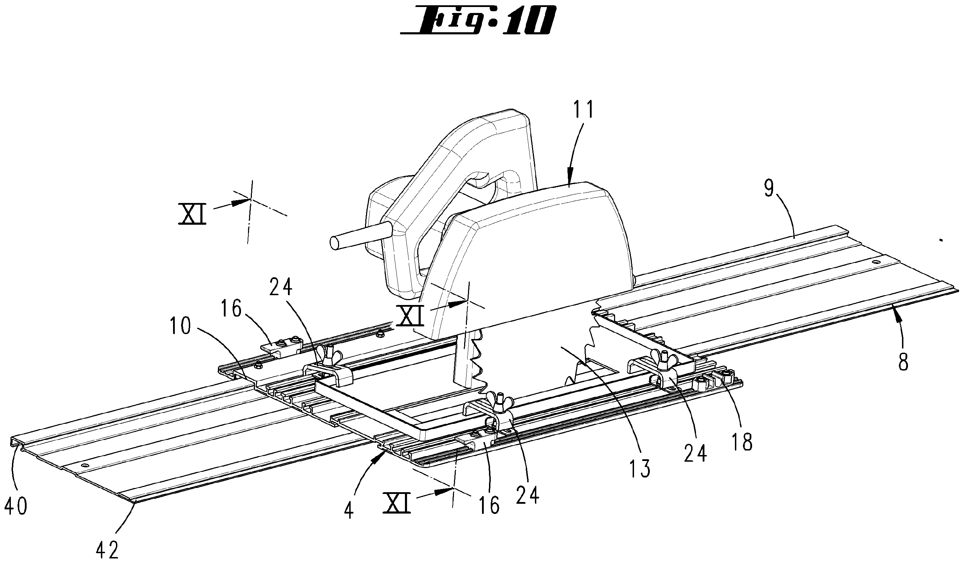

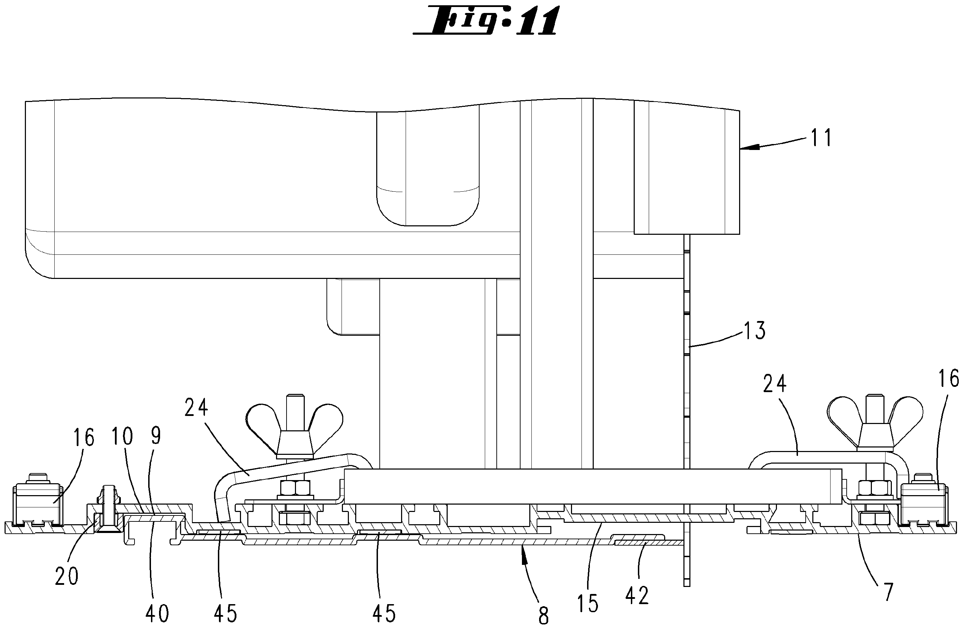

Die Figuren 10 bis 14 zeigen eine alternative Verwendungsart des elektrisch angetriebenen Werkzeugs 11 in Kombination mit der Einsatzplatte 4. Das unverändert mit der Montageseite der Einsatzplatte 4 befestigte elektrisch antreibbare Werkzeug 11, also im Ausführungsbeispiel die Kreissäge, wird bei diesem mobilen Einsatz an einer Führungsschiene 8 geführt. Dabei greift die Führungsrippe 9 in die auf der Arbeitsseite sich über die gesamte Länge der Arbeitsseite 7 erstreckende Führungsnut 10 der Einsatzplatte 4 ein. Die Arbeitsmaschine 11 ist dabei derart auf der Montageseite 5 befestigt, dass ihr Kreissägeblatt 13 über die Unterseite der Führungsschiene 8 ragt. Das Kreissägeblatt 13 verläuft dabei entlang des Randes einer Splitterschutzleiste 42, die an den Rand der Führungsschiene 8 angeklebt ist.

Mittels unterschiedlicher Führungsleisten 20 lässt sich die Einsatzplatte 4 an verschieden breiten Führungsrippen 9 anpassen.

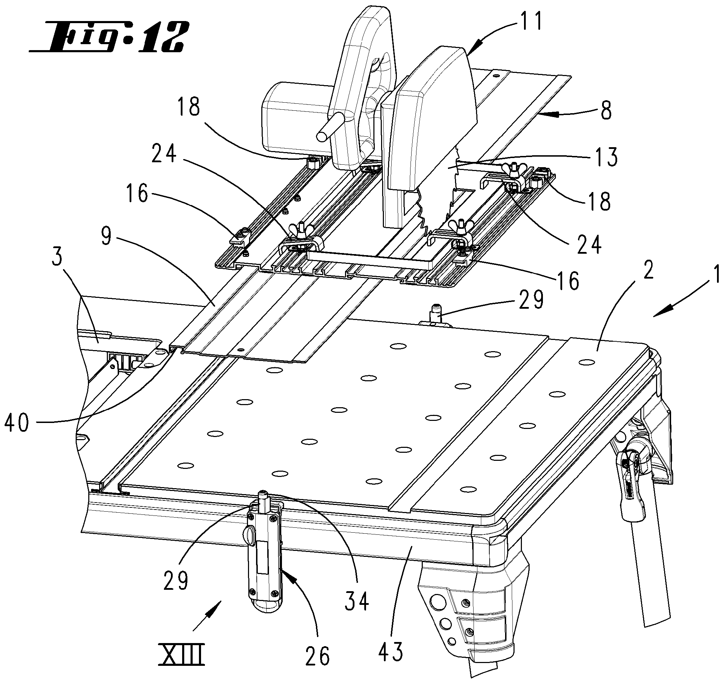

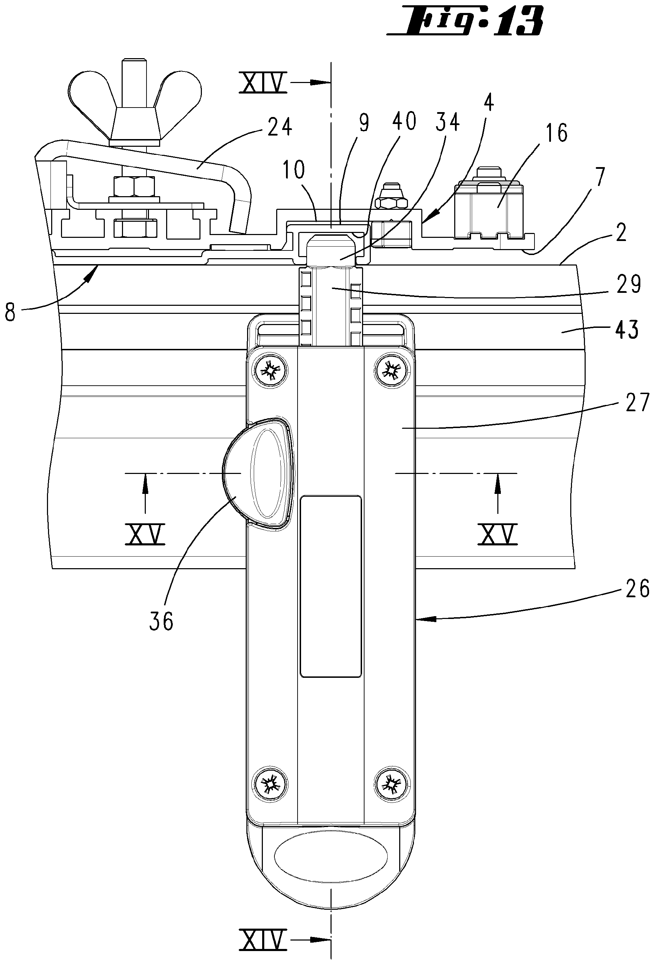

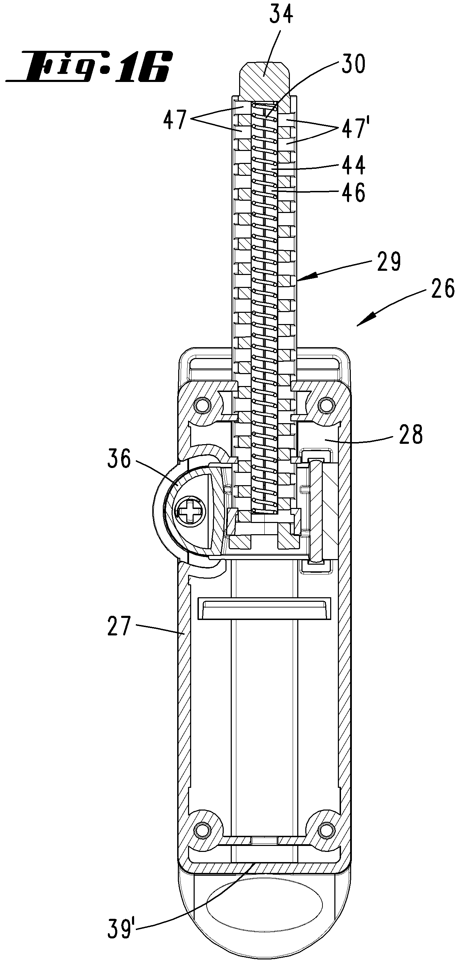

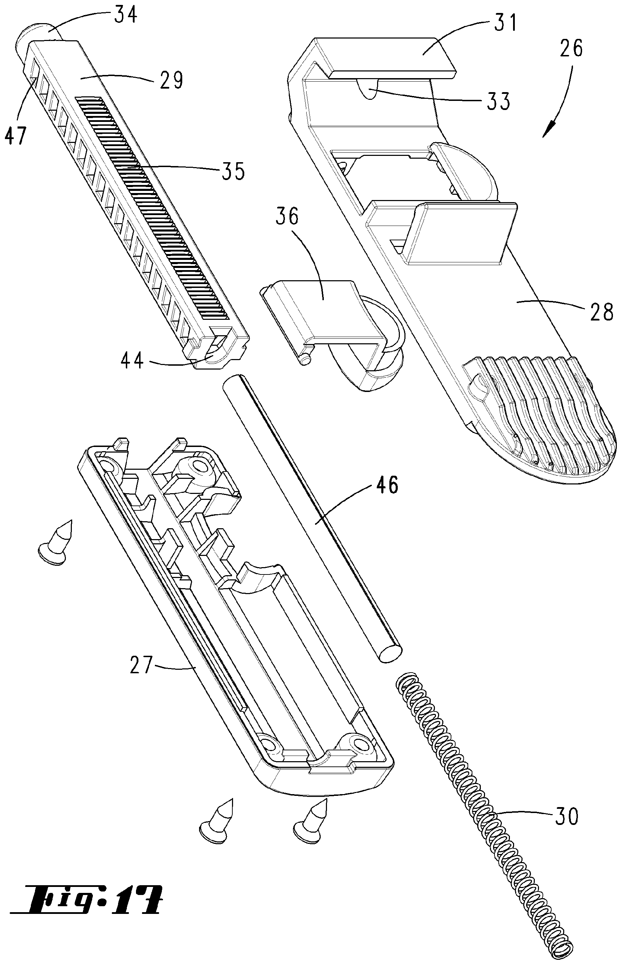

Die Führungsrippe 9 der insbesondere als Strangprofil gefertigten Führungsschiene 8 wird von einer zur anderen Seite offenen, im Ausführungsbeispiel C-förmigen Profilnut 40 ausgebildet. In diese Profilnut 40 kann der Kopf 34 einer in den Figuren 12 bis 17 dargestellten Ausrichtvorrichtung 26 eintreten. Wie die Figur 13 zeigt, besitzt der im Querschnitt runde Kopf 34 einen Durchmesser, der dem Abstand der beiden C-Stege der C-förmigen Führungsnut 10 entspricht. Es ist aber auch möglich, eine Ausrichtvorrichtung 26 mit einer ein U-förmiges Profil aufweisenden Profilnut 40 zu verwenden. Dann muss der Kopf 34 einen der Öffnungsweite der U-förmigen Nut entsprechenden Durchmesser aufweisen, damit er im Wesentlichen spielfrei in die Profilnut 40 eingreifen kann.

Alternativ dazu ist es aber auch möglich, dass der Kopf 34 die C-förmige Nut oder eine anders hinterschnittene Nut vollständig oder im Wesentlichen vollständig derart ausfüllt, dass der Kopf 34 nicht nur formschlüssig in die Nut eintaucht, sondern sogar formschlüssig in der Profilnut 40 gegen Herausziehen in Richtung quer zur Erstreckungsebene der Führungsschiene 8 gesichert ist. Bei einer derartigen Ausgestaltung des Kopfes 34 ist der Kopf 34 von der Stirnseite der Führungsschiene 8 her in die Profilnut 40 zu fädeln.

Wie in der Figur 12 zu entnehmen ist, sind zwei Ausrichtvorrichtungen 26 vorgesehen, die zusammen ein Ausrichtmittel ausbilden, mit dem eine Querverlagerung der Führungsschiene 8 über die Arbeitsplatte 2 vermieden ist. Die beiden jeweils am Rahmen 43 des Arbeitstisches 1 befestigten Ausrichtvorrichtungen 26 sind derart weit von einer Nut in der Oberfläche der Arbeitsplatte 2 entfernt, dass das Sägeblatt 13 in der in der Figur 13 dargestellten Eingriffsstellung des Kopfes 34 in die Profilnut 40 in diese Nut der Arbeitsplatte 2 eingreifen kann.

Mit dem Ausrichtmittel 26 lassen sich verschieden dicke Werkstücke bearbeiten. Hierzu sitzt der Kopf 34 an einem stabförmigen, beweglichen Element 29, das in einem Führungsschacht 39 eines Gehäuses 27, 28 der Ausrichtvorrichtung 26 verlagerbar ist. Das bewegliche Element 29 ist in Vertikalrichtung verlagerbar, sodass es auch in unterschiedlichen Abstandsstellungen der Führungsschiene 8 zur Oberfläche der Arbeitsplatte 2 in die Profilnut 40 eingreifen kann.

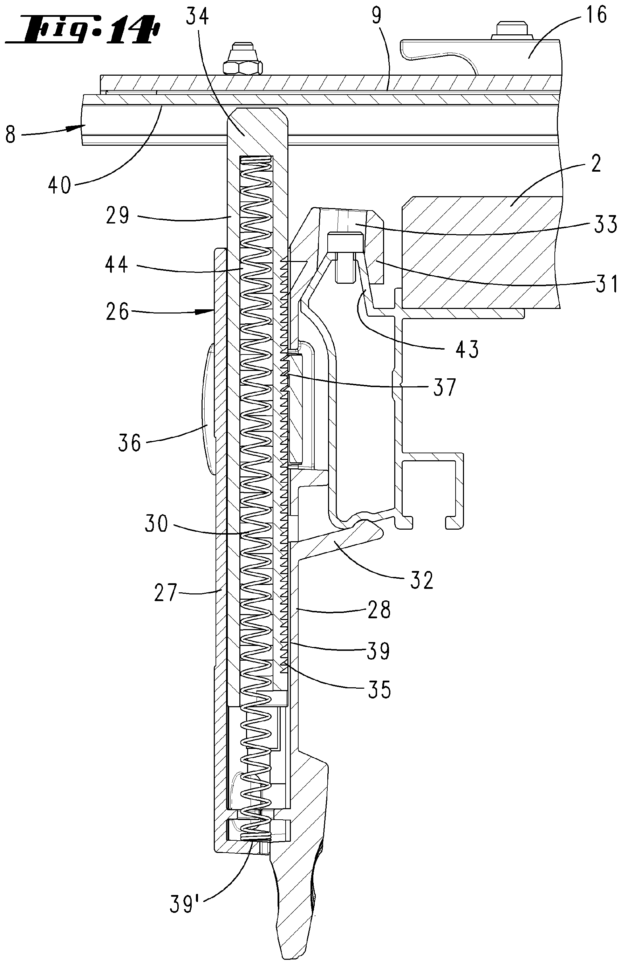

Das Gehäuse der Ausrichtvorrichtung 26 ist zweiteilig. Eine Gehäusehälfte 27 ist mit einer anderen Gehäusehälfte 28 über vier Verbindungsschrauben miteinander verbunden. Die beiden Gehäusehälften 27, 28 bestehen aus Kunststoff. Die Gehäusehälfte 28 bildet einen Befestigungsarm 31 mit einer Positionieröffnung 33 und einem Befestigungsarm 32 mit einem Rastvorsprung aus. Der Figur 14 ist zu entnehmen, dass der Rastvorsprung des Befestigungsarmes 32 in eine Rastnut des Profilrandes 34 eingreift und dass die Positionieröffnung 33 über einer Positionierschraube am Rahmen 43 liegt. Durch geeignete Anordnung der Positionierschraube 33 kann die Führungsschiene 8 derart auf der Arbeitsplatte 2 montiert werden, dass das Sägeblatt der auf der Führungsschiene 8 geführten Kreissäge durch eine Nut in der Oberseite der Arbeitsplatte 2 geführt wird. Hierdurch wird vermieden, dass beim Sägen in die Oberfläche der Arbeitsplatte eingeschnitten werden muss. Die Ausrichtmittel 26 können ansonsten aber auch an jeder anderen Stelle am Rand der Arbeitsplatte 2 festgelegt werden. Am Rahmen 43 sind zur Festlegung der Parallelität Markierungen vorgesehen.

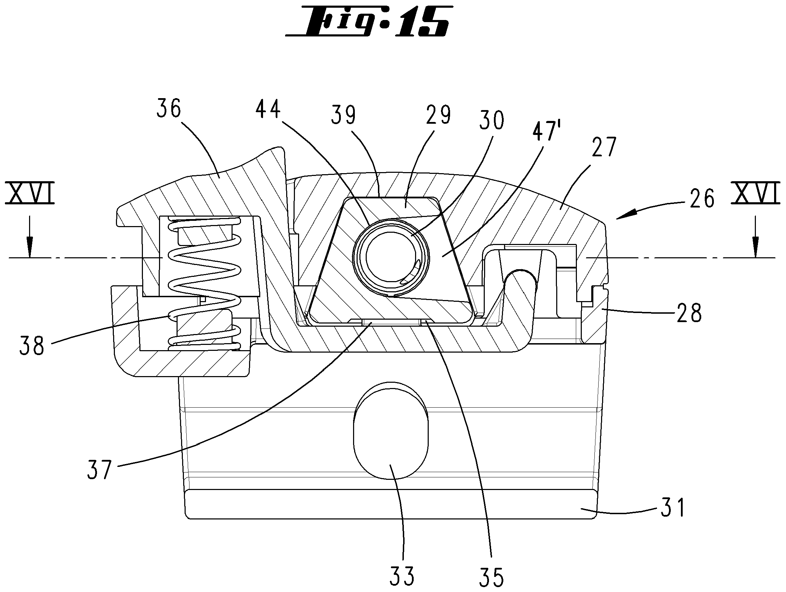

Im zusammengebauten Zustand bilden die Gehäusehälfte 27, 28 einen im Querschnitt (siehe Figur 15) trapezförmigen Führungsschacht 39 aus, in dem der einen ebenfalls trapezförmigen Querschnitt aufweisende Stab 29 geführt ist.

Der Stab 29 besitzt eine Höhlung 44, in der eine Druckfeder 30 steckt, die sich am Boden 39' des Führungsschachtes 39 abstützt und der das bewegliche Element 29 bzw. den Kopf 34 in Vertikalrichtung nach oben beaufschlagt. Die Höhlung 44 wird bevorzugt von einer Vielzahl wechselseitig eingebrachter Taschen 47, 47' ausgebildet. Dies vereinfacht den Aufbau des Spritzgusswerkzeuges, welches kammartig ineinandergreifende Formvorsprünge aufweist, die die Taschen 47, 47' formen. Innerhalb dieser langgestreckten Höhlung ist zur besseren Führung der Druckfeder 30 eine Hülse 46 eingesteckt. Hierdurch wird ein Verkannten der einzelnen Federwindungen mit den Kanten der Taschen 47, 47' vermieden.

In einer nicht dargestellten Alternative ist vorgesehen, dass die Höhlung 44 eine Sackbohrung ist.

Auf einer Seite, beim Ausführungsbeispiel auf der Basisseite des trapezförmigen Profils besitzt der Stab 29 eine Vielzahl von Rastzähnen 35, die mit Gegenrastzähnen 37 eines Rasthebels 36 korrespondieren. Die Schrägflanken der Rastzähne 35, 37 sind so ausgerichtet, dass sich der Stab 29 durch vertikalen Druck von oben in den Führungsschacht 39 einschieben lässt. Er kann aber nur aus dem Führungsschacht 39 in Vertikalrichtung nach oben austreten, wenn der Rasthebel 36 zuvor gegen die Rückstellkraft der Feder 38 in eine Freigabestellung verlagert worden ist. Dies ist erforderlich, wenn die Führungsschiene 8 mit dickeren Werkstücken verwendet werden soll.

Der Rastmechanismus 35, 36, 37 ist optional. Er ist insbesondere dann von Vorteil, um den Stab 29 in der vollständig im Führungsschacht 39 eingeschobenen Stellung zu halten, wenn beispielsweise die Handkreissäge 11 im stationären Betrieb verwendet werden soll. Alternativ zur Verrastung kann der Stab 29 auch allein durch das Gewicht der Führungsschiene 8 bzw. des auf ihr aufliegenden Werkzeugs 11 niedergehalten werden.

Die Erfindung betrifft somit eine aus einem Arbeitstisch 1 mit Aufnahmeöffnung 3, einer Führungsschiene 8 mit Führungsrippe 9 und einer sowohl in die Aufnahmeöffnung 3 einsetzbare als auch entlang der in einer Führungsnut 10 eingreifenden Führungsrippe 9 verschiebliche Maschinenbefestigungsplatte 4, bei der am Arbeitstisch 1 auch Ausrichtmittel 26 angeordnet sein können, um die Führungsschiene 8 auf einem auf der Arbeitsplatte 2 liegenden Werkstück zu fixieren.

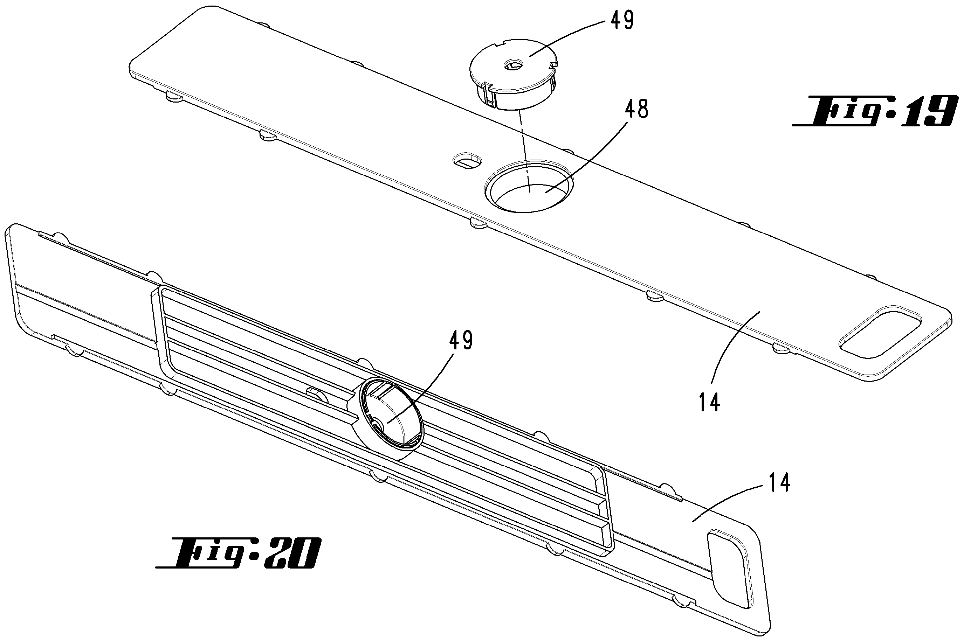

Die Figuren 19 und 20 zeigen eine anders gestaltete Sicherheitsplatte 14, die zusammen mit einer Stichsäge oder bevorzugt einer Oberfräse verwendet werden kann. Die Werkzeugdurchtrittsöffnung ist hier als Bohrung 48 ausgebildet. Soll diese Sicherheitsplatte mit einer Stichsäge verwendet werden oder mit einem durchmessergeringen Fingerfräser, so kann der Durchmesser der kreisförmigen Werkzeugdurchtrittsöffnung 48 durch Einsatz einer Einsetzkappe 49 verkleinert werden. Die Einsetzkappe 49 besitzt eine durchmessergeringere Werkzeugdurchtrittsöffnung.

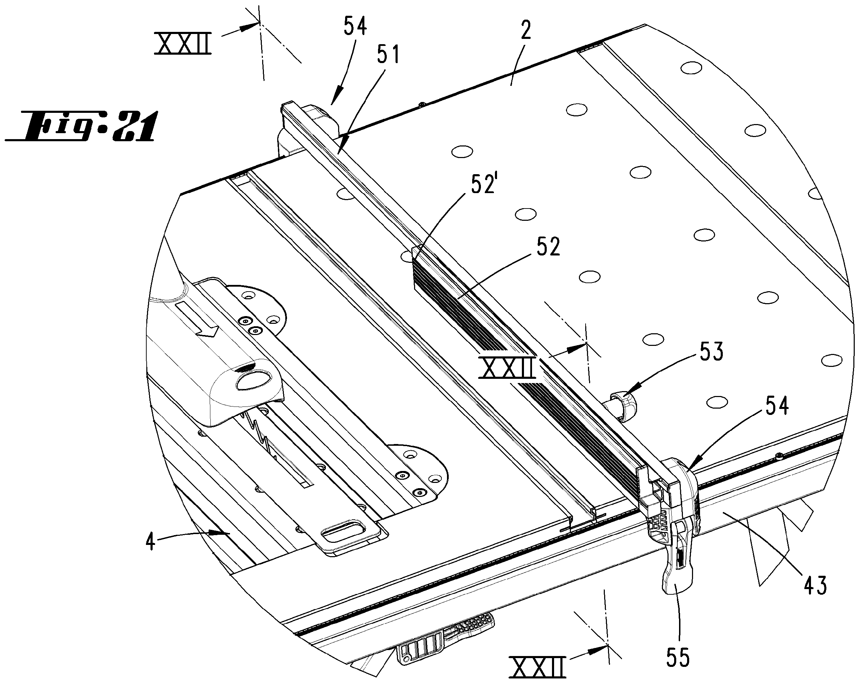

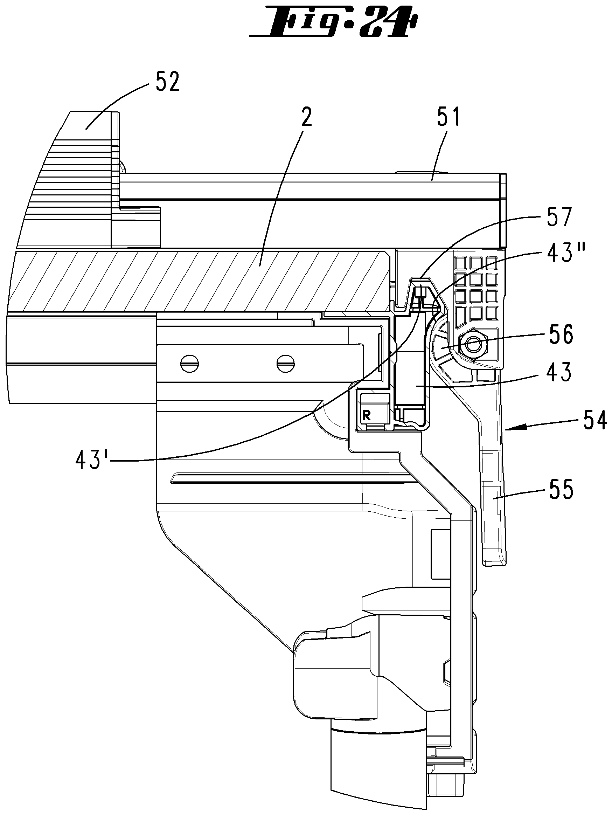

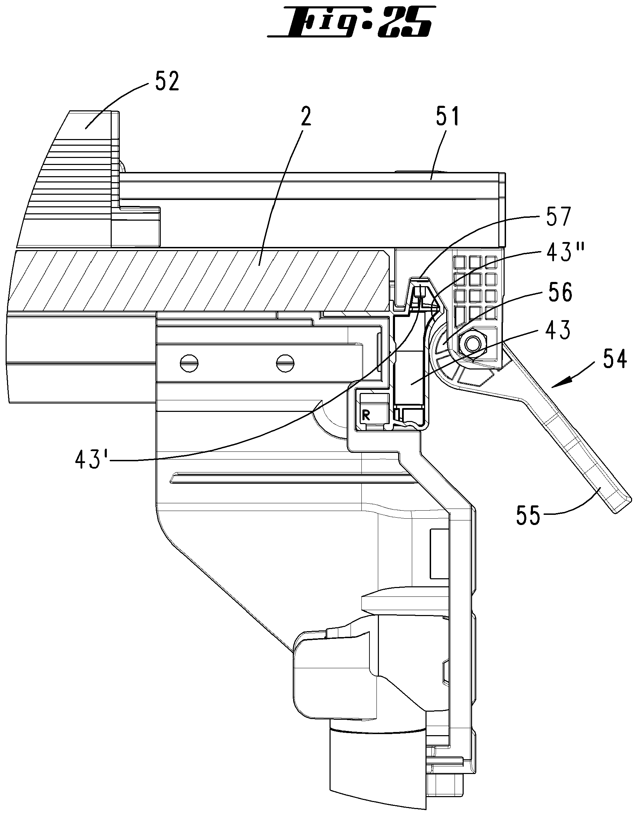

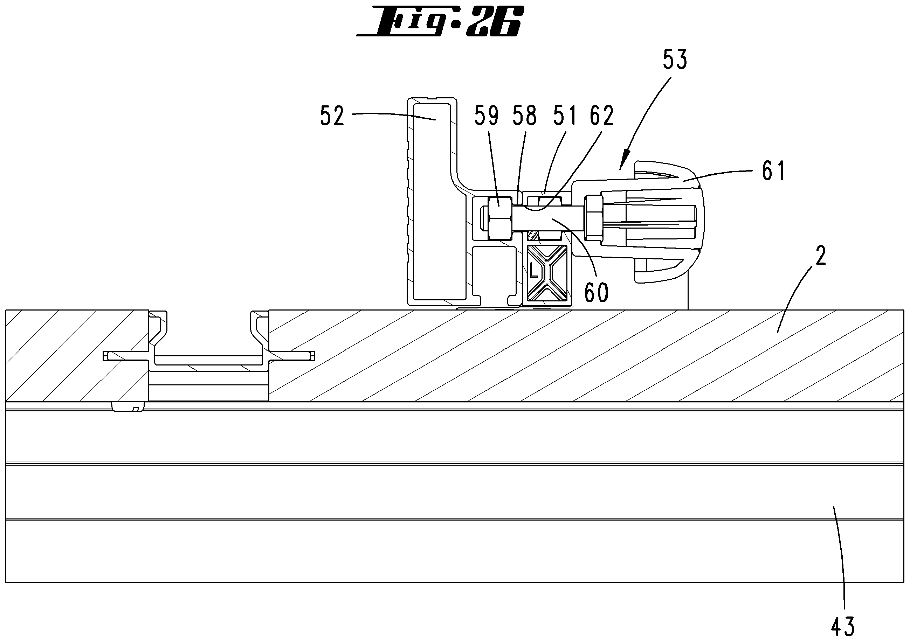

Die Figuren 21 bis 26 zeigen einen Längsanschlag. Dieser besteht aus einem ersten, insbesondere aus Metall gefertigten Stranggussprofil 51, welches mit Klemmvorrichtungen 54 an den beiden sich gegenüberliegenden Seiten der Arbeitsplatt 2 befestigt ist. Die Befestigung erfolgt an einem profilierten Rahmen 43.

Der Längsanschlag 51 besitzt eine Feststelleinrichtung 53, die eine Drehhandhabe 61 ausbildet, die drehfest mit einem Gewindeschaft 60 verbunden ist, der durch eine Bohrung 62 des Längsanschlages 51 hindurchgreift. Mit dieser Feststelleinrichtung 53 kann auf der zum Werkzeug 13 weisenden Seite des Längsanschlages 51 eine Führungsleiste 52 fixiert werden. Die Führungsleiste 52 besteht ebenfalls aus einem Stranggussprofil und kann in Erstreckungsrichtung des Längsanschlages 51 verschoben werden. Mit Hilfe der Feststelleinrichtung 53 kann die Führungsleiste 52 am Längsanschlag 51 fixiert werden.

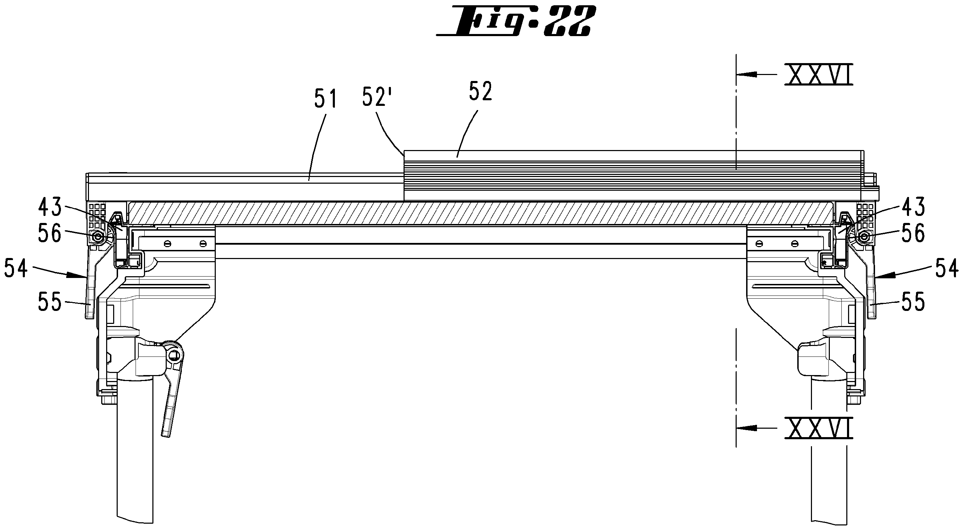

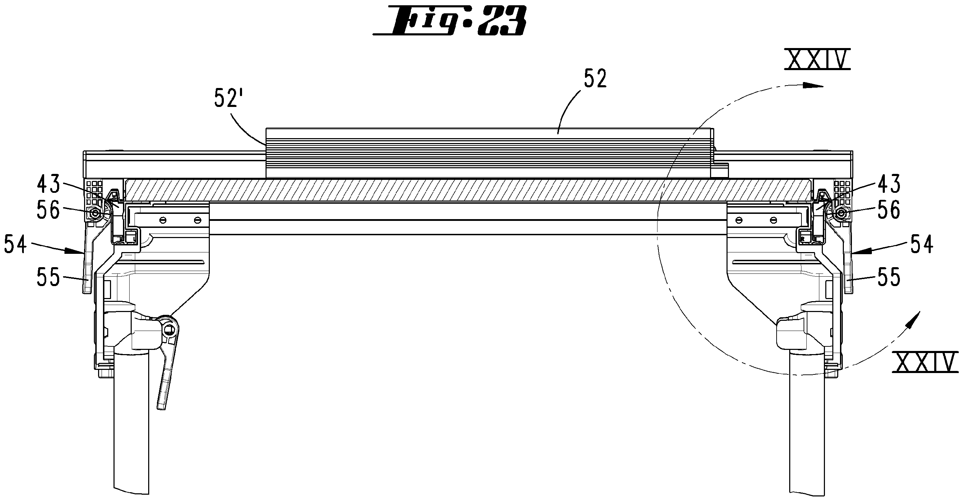

Die Figuren 22 und 23 zeigen zwei verschiedene Positionen der Führungsleiste 52. Durch die Verschiebbarkeit der Führungsleiste 52 gegenüber dem parallel zur Schnittrichtung des Werkstücks verlaufenden Längsanschlag 51 kann das in Schnittrichtung weisende Ende 52' der Führungsleiste 52 an die Lage des Werkzeugs 13 angepasst werden. Beispielsweise ist es möglich, das Ende 52' genau auf die Höhe zu positionieren, auf der der Schnitt in das Werkstück stattfindet. Hierdurch bildet sich in Schnittrichtung abwärts der Führungsleiste 52 ein seitlicher Freiraum bis zum Längseinschlag 51 aus, in den das geschnittene Werkstück ausweichen kann.

An jedem seiner beiden Enden besitzt der Längsanschlag 51 eine Klemmvorrichtung 54, mit der der Längsanschlag 51 in Parallelrichtung zum Schnitt durch das Werkstück an einem Profilrahmen 43 befestigt werden kann. Hierzu bildet die Klemmvorrichtung 54 eine Nut 57 aus, die auf einer nach oben weisenden Profilrippe 43' des Rahmenprofils 43 aufliegt. Das Rahmenprofil 43 bildet darüber hinaus eine in etwa in Opposition zur Rippe 43' stehende Flanke 43", in der sich ein Exzenternocken 56 eines Spannhebels 55 abstützt. Der Spannhebel 55 ist drehbar an einem Grundkörper der Klemmvorrichtung 54 gelagert.

**Bezugszeichenliste**

| | | | |
|---|---|---|---|
| 1 | Arbeitstisch | 31 | Befestigungsarm |
| 2 | Arbeitsplatte | 32 | Befestigungsarm |
| 3 | Aufnahmeöffnung | 33 | Positionieröffnung |
| 4 | Einsatzplatte | 34 | Kopf |
| 5 | Montageseite | 35 | Rastzähne |
| 6 | Werkzeugdurchtrittsöffnung | 36 | Rasthebel |
| 7 | Arbeitsseite | 37 | Rastzähne |
| 8 | Führungsschiene | 38 | Feder |
| 9 | Führungsrippe | 39 | Führungsschacht |
| 10 | Führungsnut | 39' | Boden |
| 11 | Antriebsmaschine | 40 | Profilnut |
| 12 | Werkstück | 41 | Aussparung |
| 13 | Werkzeug, Kreissägeblatt | 42 | Splitterschutzleiste |
| 14 | Sicherheitsplatte | 43 | Profilrand |
| 14' | Endabschnitt | 44 | Öffnung |
| 15 | Aussparung | 45 | Gleitelement |
| 16 | Hakenelement | 46 | Hülse |
| 17 | Gelenk-/Haltezapfen | 47 | Tasche 47' Tasche |
| 18 | Rastelement | 48 | Werkzeugdurchtrittsöffnung |
| 19 | Rastzapfen | 49 | Kappe |
| 20 | Führungsleiste | 50 | Queranschlag |
| 21 | Federelement | 51 | Längsanschlag |
| 22 | Nische | 52 | Führungsleiste |
| 23 | Nische | 53 | Feststelleinrichtung |
| 24 | Spannpratze | 54 | Klemmvorrichtung |
| 25 | Fortsätze | 55 | Spannhebel |
| 26 | Ausrichtmittel | 56 | Exzenternocken |
| 27 | Gehäusehälfte | 57 | Nut |
| 28 | Gehäusehälfte | 58 | Längsschlitz |
| 29 | Stab | 59 | Mutter |
| 30 | Feder | 60 | Gewindeschaft |
| | | 61 | Drehhandhabe |
| | | 62 | Bohrung |

## Patentansprüche

1. Vorrichtung mit einem eine Arbeitsplatte (2) mit Aufnahmeöffnung (3) aufweisenden Arbeitstisch (1) zum stationären Betrieb eines maschinenangetriebenen Werkzeugs, mit einer in die Aufnahmeöffnung einsetzbaren Einsatzplatte (4), die an ihrer im eingesetzten Zustand nach unten weisenden Montageseite (5) Befestigungsmittel (24) zur Befestigung einer Antriebsmaschine (11) und eine Werkzeugdurchtrittsöffnung (6) aufweist, durch die ein von der Antriebsmaschine (11) antreibbares Werkzeug (13) über die im eingespannten Zustand nach oben weisende Arbeitsseite (7) ragt, wobei die Einsatzplatte (4) zum mobilen Betrieb des maschinenangetriebenen Werkzeugs auf ihrer Arbeitsseite (7) ein Oberflächenprofil (10) aufweist, das zu einem Führungsprofil (9) einer Führungsschiene (8) korrespondiert, sodass die an der Montageseite (5) befestigte Antriebsmaschine (11) entlang der auf einem Werkstück (12) aufliegenden Führungsschiene (8) mit in das Werkstück (12) eingreifendem Werkzeug (13) in Längsrichtung der Führungsschiene (8) verlagerbar ist, **dadurch gekennzeichnet, dass** die Einsatzplatte (4) mit einer Steck-Schwenkbewegung in die Aufnahmeöffnung (3) einsetzbar ist, wobei am Rand der Aufnahmeöffnung (3) angeordnete Gelenk-Haltezapfen (17) in Hakenaufnahmeöffnungen von am Rand der Einsatzplatte (4) sich befindenden Hakenelementen (16) eintreten und eine Schwenkachse ausbilden, wenn die Gelenk-Haltezapfen (17) gegen ein rückwärtiges Ende der Halteöffnung anstoßen, wobei sich die andere Seite der Einsatzplatte (4) im vollständig eingeschwenkten Zustand an Rastzapfen (19) abstützt, die ebenfalls von den beiden Längsseitenrändern der Aufnahmeöffnung (3) abragen, und die mit Rastelementen am unteren Rand der Einsatzplatte (4) verrasten.

2. Vorrichtung nach Anspruch 1, **gekennzeichnet durch** eine Sicherheitsplatte (14), die in einer Aussparung (15) in der Arbeitsseite (7) zur Verminderung der Öffnungsweite der Werkzeugdurchtrittsöffnung (6) einsetzbar ist.

3. Vorrichtung nach Anspruch 2, **dadurch gekennzeichnet, dass** die in der Aufnahmeöffnung (3) mit ihrer Arbeitsseite (7) bündig in der Oberfläche der Arbeitsplatte (2) liegende Einsatzplatte (4) mittels der Sicherheitsplatte (14) schwenkblockierbar ist.

4. Vorrichtung nach einem der Ansprüche 2 oder 3, **dadurch gekennzeichnet, dass** die Sicherheitsplatte (14) längsverschieblich in der Aussparung (15) einliegt und in der die Einsatzplatte (4) schwenkblockierenden Stellung mit einem Überstandsabschnitt (14') in einer Nische (22) des Randes der Aufnahmeöffnung (3) einliegt.

5. Vorrichtung nach einem der Ansprüche 2 bis 4, **dadurch gekennzeichnet, dass** die Sicherheitsplatte (14) seitliche Fortsätze (25) aufweist, die in der Schwenkblockierstellung in eine Untergriffsstellung unter den Rand der Aussparung (15) treten, um die Sicherheitsplatte (14) gegen ein vertikales Herausnehmen aus der Aussparung (15) zu sichern.

6. Vorrichtung nach einem der vorhergehenden Ansprüche, **gekennzeichnet durch** insbesondere am Rand der Arbeitsplatte (2) angeordnete Ausrichtmittel (26), die in eine Profilnut (40) der auf der Arbeitsplatte (2) aufliegenden Führungsschiene (8) greifen, um sie gegen eine Querverlagerung zu sichern.

7. Vorrichtung (26) nach einem der vorhergenden Ansprüche, **gekennzeichnet durch** ein am Rande der Arbeitsplatte (2) des Arbeitstisches (1) befestigbaren Gehäuses (27,28) mit einem vertikal vom Gehäuse (27, 28) insbesondere von einem im Gehäuse (27, 28) geführten beweglichen Element (29) abragendem Kopf (34), der in eine Profilnut (40) einer auf der Arbeitsplatte (2) aufgelegten Führungsschiene (8) eingreifen kann, um sie gegen eine Querverlagerung zu sichern.

8. Vorrichtung nach Anspruch 7, **dadurch gekennzeichnet, dass** das Gehäuse (27, 28) bzw. das Ausrichtmittel (26) ein in einem Führungsschacht (39) steckendes, vertikal bewegliches Element (29) aufweist, das einen Kopf (34) aufweist, der in die Profilnut (27) eingreift.

9. Vorrichtung nach Anspruch 8, **dadurch gekennzeichnet, dass** das bewegliche Element (29) mittels eines Federelementes (30) in Richtung aus dem Führungsschacht (39) heraus beaufschlagt wird.

10. Vorrichtung nach Anspruch 9, **gekennzeichnet durch** Rastmittel (35, 37), die eine Herausverlagerung des beweglichen Elementes (29) aus dem Führungsschacht (39) verhindern, wobei die Verrastung zwischen den Rastelementen (35, 37) durch Betätigen eines Rasthebels (36) aufhebbar ist.

11. Vorrichtung nach einem der vorhergehenden Ansprüche, **gekennzeichnet durch** eine parallel zur Schnittrichtung insbesondere an einem Rahmen (43) des Arbeitstisches (1) befestibaren Längsanschlag (51), der auf seiner zum Werkzeug (13) weisenden Seite eine in Erstreckungsrichtung des Längsanschlages (51) verschiebliche und in verschiedenen Stellungen fixierbare Führungsleiste (52) aufweist.

12. Vorrichtung nach Anspruch 11, **dadurch gekennzeichnet, dass** der Längsanschlag (51) an den beiden sich gegenüberliegenden Seiten der Arbeitsplatte (2) des Arbeitstisches (1) insbesondere an einem die Arbeitsplatte (2) einfassenden Rahmen (43) mittels jeweils einer Klemmvorrichtung (54) befestigbar ist.

## Claims

1. Device comprising a work table (1) having a work plate (2) that comprises a receiving opening (3) for stationary operation of a machine-driven tool, comprising an insert plate (4) which can be inserted into the receiving opening and comprises, on the mounting face (5) thereof which faces downwards when inserted, attaching means (24) for attaching a drive machine (11) and a tool passage opening (6) through which a tool (13), which is drivable by the drive machine (11), projects beyond the work face (7) which faces upwards when clamped, the insert plate (4) having a surface profile (10) on the work face (7) thereof for mobile operation of the machine-driven tool, which surface profile corresponds to a guide profile (9) of a guide rail (8) such that the drive machine (11) attached to the mounting face (5) is displaceable along the guide rail (8), in the longitudinal direction of the guide rail (8), which rests on a workpiece (12) so as to have a tool (13) engaging in the workpiece (12), **characterised in that** the insert plate (4) can be inserted into the receiving opening (3) by means of a push-in-pivoting movement, hinge retaining pins (17) arranged on the edge of the receiving opening (3) entering hook-receiving openings of hook elements (16) located on the edge of the insert plate (4) and forming a pivot axis when the hinge retaining pins (17) abut against a rear end of the retaining opening, the other side of the insert plate (4), when fully pivoted in, being supported on latching pins (19) which also protrude from the two longitudinal side edges of the receiving opening (3) and latch with latching elements on the lower edge of the insert plate (4).

2. Device according to claim 1, **characterised by** a safety plate (14) which can be inserted in a recess (15) in the work face (7) in order to reduce the opening width of the tool passage opening (6).

3. Device according to claim 2, **characterised in that** in the insert plate (4), which lies in the receiving opening (3) so as to have the work face (7) thereof flush with the surface of the work plate (2), can be blocked from pivoting by means of the safety plate (14).

4. Device according to either claim 2 or claim 3, **characterised in that** the safety plate (14) rests in a longitudinally displaceable manner in the recess (15) and rests in the position in which the insert plate (4) is blocked from pivoting so as to have an overhang portion (14') in a niche (22) in the edge of the receiving opening (3).

5. Device according to any of claims 2 to 4, **characterised in that** the safety plate (14) comprises lateral projections (25) which, in the pivot-blocking position, pass into an underlapping position under the edge of the recess (15) in order to secure the safety plate (14) against being vertically removed from the recess (15).

6. Device according to any of the preceding claims, **characterised by** alignment means (26) which are arranged in particular on the edge of the work plate (2) and engage in a profile groove (40) of the guide rail (8) resting on the work plate (2) in order to secure said guide rail against transverse displacement.

7. Device (26) according to any of the preceding claims, **characterised by** a housing (27, 28) which is attachable to the edge of the work plate (2) of the work table (1) and has a head (34) which protrudes vertically from the housing (27, 28), in particular from a movable member (29) guided in the housing (27, 28), and which can engage in a profile groove (40) of a guide rail (8) mounted on the work plate (2) in order to secure said guide rail against transverse displacement.

8. Device according to claim 7, **characterised in that** the housing (27, 28) or the alignment means (26) comprises a vertically movable element (29) which is pushed in in a guide shaft (39) and comprises a head (34) which engages in the profile groove (27).

9. Device according to claim 8, **characterised in that** the movable element (29) is acted upon in the direction outwardly of the guide shaft (39) by means of a spring element (30).

10. Device according to claim 9, **characterised by** latching means (35, 37) which prevent displacement of the movable element (29) out of the guide shaft (39), it being possible to unlatch the latching elements (35, 37) by actuating a latching lever (36).

11. Device according to any of the preceding claims, **characterised by** a longitudinal stop (51) which is attachable in particular to a frame (43) of the work table (1) in parallel with the cutting direction and which comprises, on the side thereof facing the tool (13), a guide strip (52) which is displaceable in an extension direction of the longitudinal stop (51) and fixable in various positions.

12. Device according to claim 11, **characterised in that** the longitudinal stop (51) can be attached to the two opposite sides of the work plate (2) of the work table (1), in particular to a frame (43) surrounding the work plate (2), by means of a clamping device (54) in each case.

## Revendications

1. Dispositif, comprenant une table de travail (1) comportant un plan de travail (2) à ouverture de réception (3) pour le fonctionnement stationnaire d'un outil entraîné par une machine, et comprenant une plaque d'insertion (4) qui est insérable dans l'ouverture de réception et qui présente, sur son côté de montage (5) orienté vers le bas à l'état inséré, des moyens de fixation (24) pour fixer une machine d'entrainement (11) et une ouverture (6) de passage d'outil à travers laquelle un outil (13) entraînable par la machine d'entraînement (11) fait saillie au-dessus du côté de travail (7) qui est orienté vers le haut à l'état monté, dans lequel la plaque d'insertion (4) présente sur son côté de travail (7) un profil de surface (10) pour le fonctionnement mobile de l'outil entraîné par machine, qui correspond à un profil de guidage (9) d'un rail de guidage (8) de manière que la machine d'entraînement (11), fixée sur le côté de montage (5), puisse être déplacée le long du rail de guidage (8) reposant sur une pièce d'œuvre (12) dans la direction longitudinale du rail de guidage (8) avec l'outil (13) s'engageant dans la pièce d'œuvre (12), **caractérisé en ce que** la plaque d'insertion (4) peut être insérée dans l'ouverture de réception (3) avec un mouvement de pivotement-emboitement, dans laquelle des broches de retenue et d'articulation (17) agencées au bord de l'ouverture de réception (3) entrent dans des ouvertures de réception de crochets d'éléments de crochets (16) situés au bord de la plaque d'insertion (4) et forment un axe de pivotement lorsque les broches de retenue et d'articulation (17) viennent en butée contre une extrémité arrière de l'ouverture de retenue, l'autre côté de la plaque d'insertion (4) étant supporté à l'état complètement pivoté par des broches d'encliquetage (19) qui font également saillie des deux bords des côtés longitudinaux de l'ouverture de réception (3) et qui vont s'enclencher avec des éléments d'encliquetage sur le bord inférieur de la plaque d'insertion (4).

2. Dispositif selon la revendication 1, **caractérisé par** une plaque de sécurité (14) qui peut être insérée dans un évidement (15) ménagé dans le côté de travail (7) pour réduire la largeur d'ouverture de l'ouverture du passage d'outil (6).

3. Dispositif selon la revendication 2, **caractérisé en ce que** la plaque d'insertion (4) se trouvant dans l'ouverture de réception (3) avec son côté de travail (7) affleurant la surface de la plaque de travail (2) peut être bloquée en pivotement au moyen de la plaque de sécurité (14).

4. Dispositif selon l'une des revendications 2 ou 3, **caractérisé en ce que** la plaque de sécurité (14) est insérée de manière déplaçable longitudinalement dans l'évidement (15) et, dans la position de blocage en pivotement de la plaque d'insertion (4), est insérée avec une partie saillante (14') dans une niche (22) du bord de l'ouverture de réception (3).

5. Dispositif selon l'une des revendications 2 à 4, **caractérisé en ce que** la plaque de sécurité (14) présente des prolongements latéraux (25) qui, en position de blocage en pivotement, viennent en position de prise sous le bord de l'évidement (15) pour empêcher un retrait vertical de la plaque de sécurité (14) hors de l'évidement (15).

6. Dispositif selon l'une des revendications précédentes, **caractérisé par** des moyens d'alignement (26) agencés en particulier sur le bord du plan de travail (2), qui s'engagent dans une rainure profilée (40) du rail de guidage (8) reposant sur le plan de travail (2) pour empêcher un déplacement transversal de celui-ci.

7. Dispositif (26) selon l'une des revendications précédentes, **caractérisé par** un boîtier (27, 28) qui peut être fixé au bord du plan de travail (2) de la table de travail (1) et comprenant une tête (34) qui dépasse verticalement du boîtier (27, 28), en particulier d'un élément mobile (29) guidé dans le boîtier (27, 28), et qui peut s'engager dans une rainure profilée (40) d'un rail de guidage (8) placé sur le plan de travail (2) pour empêcher un déplacement transversal de celui-ci.

8. Dispositif selon la revendication 7, **caractérisé en ce que** le boîtier (27, 28) ou bien le moyen d'alignement (26) présente un élément mobile verticalement (29) qui est inséré dans un puits de guidage (39) et qui présente une tête (34) qui s'engage dans la rainure profilée (27).

9. Dispositif selon la revendication 8, **caractérisé en ce que** l'élément mobile (29) est sollicité dans la direction de sortie hors du puits de guidage (39) au moyen d'un élément élastique (30).

10. Dispositif selon la revendication 9, **caractérisé par** des moyens d'encliquetage (35, 37) qui empêchent l'élément mobile (29) de se déplacer hors du puits de guidage (39), l'enclenchement entre les éléments d'encliquetage (35, 37) pouvant être libéré en actionnant un levier d'enclenchement (36).

11. Dispositif selon l'une des revendications précédentes, **caractérisé par** une butée longitudinale (51) qui peut être fixée parallèlement à la direction de coupe, en particulier à un cadre (43) de la table de travail (1), et qui présente, sur son côté orienté vers l'outil (13), un bandeau de guidage (52) qui est déplaçable dans la direction d'extension de la butée longitudinale (51) et fixable dans différentes positions.

12. Dispositif selon la revendication 11, **caractérisé en ce que** la butée longitudinale (51) peut être fixée aux deux côtés opposés du plan de travail (2) de la table de travail (1), en particulier sur un cadre (43) entourant le plan de travail (2), au moyen d'un dispositif de serrage (54) respectivement.
